# FASCICULE DE BREVET EUROPEEN

(11) **EP 3 902 723 B1**
(45) Date de publication et mention de la délivrance du brevet: **23.08.2023**
(21) Numéro de dépôt: 19828671.8
(22) Date de dépôt: 17.12.2019
(51) Int. Cl.: B60S 1/56

(54) **BUSE DE PROJECTION DE FLUIDE POUR DISPOSITIF DE NETTOYAGE D'UN SYSTEME DE DETECTION OPTIQUE**
FLÜSSIGKEITSSPRÜHDÜSE FÜR EINE REINIGUNGSVORRICHTUNG EINES OPTISCHEN DETEKTIONSSYSTEMS
FLUID SPRAY NOZZLE FOR A CLEANING DEVICE OF AN OPTICAL DETECTION SYSTEM

(30) Priorité: 26.12.2018 FR 1874191
(43) Date de publication de la demande: 03.11.2021
(73) Titulaire: Valeo Systèmes d'Essuyage, 78322 Le Mesnil Saint Denis (FR)
(72) Inventeur: PICOT, Philippe, 63500 ISSOIRE (FR); BAUDOUIN, Maxime, 63500 ISSOIRE (FR)
(74) Mandataire: Valeo Visibility
(86) Numéro de dépôt international: PCT/EP2019/085527
(87) Numéro de publication internationale: WO 2020/136036

(56) Documents cités:
- DE-A1-102007 011 624
- DE-A1-102007 037 492
- FR-A1- 3 056 515
- FR-A1- 3 056 526

## Description

La présente invention se rapporte au domaine des dispositifs d'aide à la conduite et, plus particulièrement, au domaine des systèmes de détection optique utilisés à cette fin. L'invention concerne plus particulièrement les dispositifs de nettoyage configurés pour le nettoyage d'un capteur optique d'un tel système de détection optique.

On appelle système de détection optique tout système comportant des capteurs optiques tels que des caméras, des capteurs laser ou autres capteurs basés sur l'émission et/ou la détection de la lumière dans le spectre visible ou invisible pour l'Homme, en particulier l'infrarouge.

De tels systèmes de détection optiques équipent un nombre de plus en plus grand de véhicules automobiles afin soit d'aider le conducteur du véhicule dans certaines situations de conduite, dont une, bien connue, est l'aide au stationnement, soit de rendre autonome ou en partie autonome la conduite du véhicule. Pour que l'autonomie et/ou l'aide à la conduite soient la plus efficace possible, les données fournies par le dispositif de détection optique doivent être de la meilleure qualité possible, et il est donc indispensable de disposer d'optiques propres pour réaliser ces acquisitions de données. Pour ce faire, un dispositif de nettoyage est agencé au voisinage d'un dispositif de détection optique (par exemple la lentille d'une caméra de prise de vues) afin de pouvoir projeter, à la demande, un fluide de manière à retirer d'éventuelles saletés déposées sur la surface du dispositif de détection.

De façon connue, un tel dispositif de nettoyage comporte un corps d'acheminement de fluide de nettoyage à travers lequel du fluide de nettoyage est apte à circuler, en provenance d'un réservoir de stockage de fluide vers une ou plusieurs buses de projection, agencée(s) à l'extrémité du corps d'acheminement en sortie d'un conduit de distribution du fluide. Le fluide est éjecté du dispositif via ces buses de projection, en direction du capteur optique à nettoyer.

Afin d'optimiser le nettoyage, il est notamment recherché une projection du fluide sous la forme d'un jet plat ou sensiblement plat, dans lequel le fluide est concentré sur une ligne de projection, plutôt qu'un jet dit conique dans lequel le fluide est projeté de façon diffuse. Il est connu pour cela l'emploi de buse de projection avec une rampe positionnée devant la sortie d'un conduit de distribution, de manière à dévier brutalement l'écoulement du fluide en direction du capteur optique à nettoyer. Ce phénomène de déviation brutale induit une modification de la forme du fluide en un jet plat divergeant.

Or, il s'avère que l'angle de divergence du jet plat varie notamment en fonction de la pression et de la viscosité du fluide. Sur une période déterminée, les inventeurs ont ainsi pu observer une variation de l'ordre de 20° de la valeur de l'angle de divergence d'un jet plat émis par ce type de buse de projection. De ce fait, la qualité du nettoyage varie en fonction de la température et de l'usure des moyens de compression du fluide du dispositif de nettoyage, la valeur de l'angle de divergence allant en augmentant lorsque la pression du fluide augmente.

Le document FR 3 056 526 A1 montre une buse de projection d'un fluide selon le préambule de la première revendication.

L'invention vise à proposer une buse de projection d'un fluide pour le nettoyage de la surface d'un capteur optique, projetant un fluide sous la forme d'un jet plat, selon un angle de divergence plus stable au cours du temps par rapport à l'état de la technique.

Selon l'invention, la buse de projection, apte à être disposée sur un corps d'un dispositif de nettoyage d'un système de détection optique monté sur un véhicule automobile, comprend un conduit de distribution interne qui s'étend entre une extrémité proximale, apte à être reliée fluidiquement à un canal de distribution de fluide ménagé dans ledit corps, et une extrémité distale formant orifice de sortie du fluide, le conduit de distribution étant délimité au moins par une paroi de fond et deux parois latérales opposées, ladite buse comportant par ailleurs une rampe agencée sur le trajet du fluide au niveau de l'orifice de sortie. Les parois latérales sont agencées au niveau de l'extrémité distale du conduit de distribution de manière à s'écarter l'une de l'autre, ledit conduit de distribution présentant un évasement en direction de la rampe.

En d'autres termes, la section de passage du fluide dans le conduit de distribution est augmentée au voisinage de la rampe, de manière à générer un étalement du fluide avant que celui-ci ne rencontre la rampe. On maîtrise de la sorte l'étalement maximal du fluide avant que son contact avec la rampe ne casse le flux pour générer un jet plat.

Selon une autre caractéristique de l'invention, la paroi de fond et les parois latérales comportent respectivement une arête de jonction avec la rampe. En d'autres termes, trois des parois participant à délimiter le conduit de distribution, à savoir la paroi de fond et les parois latérales, s'étendent toutes longitudinalement jusqu'au contact du plan incliné formant rampe. On s'assure ainsi que l'angle d'étalement maximal du fluide tel qu'il est calibré par l'évasement des parois latérales est maintenu au moment du contact du fluide avec la rampe. Le contrôle de l'angle d'ouverture du jet plat après déviation du fluide par la rampe est ainsi amélioré.

Selon d'autres caractéristiques de l'invention, prises seules ou en combinaison, on pourra prévoir que :
les parois latérales s'étendent perpendiculairement à la paroi de fond au moins au niveau de l'extrémité distale du conduit de distribution dans la portion où elles s'écartent l'une de l'autre ;
l'intersection entre chaque paroi latérale et la rampe forme une arête de jonction rectiligne ou sensiblement rectiligne, lesdites arêtes de jonction formant entre elles un angle d'ouverture compris entre 10° et 80° ; l'angle d'ouverture peut de préférence être de l'ordre de 40° ;
la rampe forme avec le plan dans lequel s'étend la paroi de fond du conduit de distribution un angle d'inclinaison dont la valeur est comprise entre 10° et 60° ;
la buse de projection comporte une base et une partie de recouvrement fixées l'une sur l'autre pour former entre elles le conduit de distribution ;
la partie de recouvrement est configurée pour former d'un seul tenant la paroi de fond du conduit de distribution, les parois latérales et le plan incliné formant rampe.
la paroi de fond du conduit de distribution est parallèle ou sensiblement parallèle à une paroi délimitant à l'opposé le conduit de distribution et formée par une face d'extrémité de la base ;
le plan incliné formant rampe s'étend en saillie de la partie de recouvrement, en direction de la base, de manière à présenter une hauteur supérieure à celle des parois latérales ; par hauteur, on entend la dimension selon une direction perpendiculaire au plan de la partie de recouvrement duquel s'étend la rampe ;
la base et la partie de recouvrement sont collées ou soudées entre elles.

L'invention concerne également un dispositif de nettoyage d'un système de détection optique monté sur un véhicule automobile, comprenant une buse de projection telle que définie ci-dessus.

La buse de projection peut être agencée à l'extrémité d'un corps télescopique, le dispositif de nettoyage étant configuré pour prendre au moins une position de repos et une position de travail dans laquelle la buse de projection est en regard d'une surface vitrée du système de détection optique à nettoyer.

L'invention a également à trait à un véhicule automobile comprenant un dispositif de nettoyage d'une face externe d'un capteur optique décrit ci-dessus.

D'autres caractéristiques, détails et avantages de l'invention et de son fonctionnement ressortiront plus clairement à la lecture de la description donnée ci-après à titre indicatif, en relation avec les figures annexées, dans lesquelles :
la [Figure 1] est une vue de face d'un véhicule automobile, dont la face avant est équipée d'un système de détection optique et d'un dispositif de nettoyage comprenant une buse de projection selon un aspect de l'invention ;
la [Figure 2] est une représentation en perspective du système de détection optique et du dispositif de nettoyage de la [Figure 1], rendant notamment visible les axes d'allongement du système de détection optique et du dispositif de nettoyage et une buse de projection selon un aspect de l'invention, disposée à l'extrémité libre du dispositif de nettoyage ;
la [Figure 3] et la [Figure 4] sont des vues en perspective d'une base de la buse de projection selon un aspect de l'invention ;
la [Figure 5] est une vue en perspective, vue de dessous, de la partie de recouvrement participant à former avec la buse de la [Figure 4] la buse de projection selon un aspect de l'invention ;
la [Figure 6] est une vue de dessus de la partie de recouvrement, rendant notamment visible une rampe de formation de jet plat et l'évasement d'un conduit de distribution ménagé dans la partie de recouvrement au niveau de la rampe ;
la [Figure 7] est une vue en coupe de la partie de recouvrement de la [Figure 6], selon un angle de perspective rendant visible les formes ménagées dans la partie de recouvrement pour former notamment le conduit de distribution ;
la [Figure 8] est une coupe longitudinale de la partie de recouvrement de la buse de projection, rendant notamment visible l'angle d'inclinaison de la rampe ;
la [Figure 9] est une coupe longitudinale d'une buse de projection selon l'invention, comprenant la partie de recouvrement et la base illustrées par les figures 3 à 8 ;
la [Figure 10] est une vue de dessous de la buse de projection, rendant visible le fluide projeté en sortie de la buse de projection.

Il est tout d'abord à noter que si les figures exposent l'invention de manière détaillée pour sa mise en oeuvre, elles peuvent, bien entendu, servir à mieux définir l'invention le cas échéant. On comprendra également que le mode de réalisation de l'invention illustré par les figures est donné à titre d'exemple non limitatif.

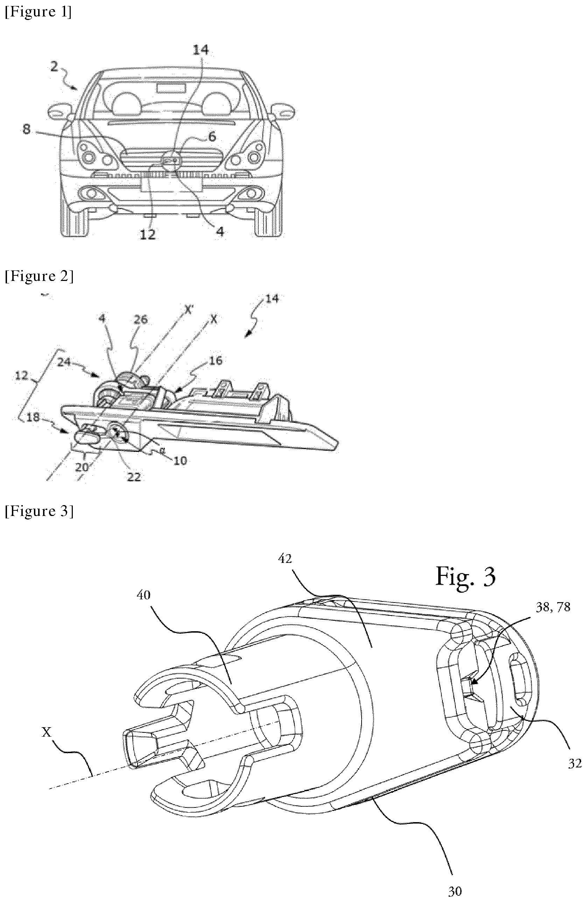

La [Figure 1] illustre une vue de face d'un véhicule automobile 2 sur lequel est installé un capteur optique 4. Le capteur optique 4 vise à aider le conducteur du véhicule 2 dans certaines situations de conduite, par exemple lors d'une manoeuvre de stationnement. Le capteur optique 4 peut être une caméra, un capteur laser ou tout autre capteur basé sur l'émission et/ou la détection de la lumière dans le spectre visible ou invisible pour l'Homme, en particulier l'infrarouge. Le capteur optique 4 est positionné au niveau d'une ouverture 6 traversant la calandre 8 du véhicule automobile 2. Le capteur optique 4 est ainsi exposé aux poussières et projections organiques. La face externe 10 du capteur optique 4 doit donc être nettoyée régulièrement, afin de garantir un fonctionnement optimal du système d'assistance à la conduite.

Pour ce faire, le véhicule automobile 2 comprend un dispositif de nettoyage 12 agencé au voisinage du capteur optique 4. Le dispositif de nettoyage est configuré pour projeter un fluide de nettoyage à la demande, de manière à retirer les saletés présentes sur la face externe 10 du capteur optique 4. Dans l'exemple illustré sur la [Figure 2], sans que cela soit limitatif de l'invention, le dispositif de nettoyage 12 et le capteur optique 4 sont montés dans des logements formés dans un boîtier commun 14. Le capteur optique 4 et le dispositif de nettoyage 12 sont montés sur le boîtier commun 14 par l'intermédiaire d'un élément de support intermédiaire 16. Le capteur optique 4 et le dispositif de nettoyage 12 s'étendent longitudinalement suivant deux axes d'allongement, respectivement (X) et (X'), sensiblement parallèles entre eux. L'axe d'allongement (X) associé au capteur optique correspond à l'axe optique du capteur optique 4 et l'axe d'allongement (X') associé au dispositif de nettoyage 12 correspond à l'axe de déploiement d'une partie télescopique du dispositif de nettoyage 12.

Sur la [Figure 2], le dispositif de nettoyage 12 est un dispositif télescopique représenté ici en position déployée afin de permettre, par l'intermédiaire d'une buse de projection 20 présente en bout du dispositif de nettoyage, la projection d'un fluide de nettoyage sur le capteur optique 4.

Le dispositif de nettoyage 12 comporte plus particulièrement un corps d'acheminement 24, comportant ici un corps creux à l'intérieur duquel un piston 18 est mobile entre une position rétractée et la position déployée évoquée ci-dessus, cette mobilité participant au déploiement télescopique de la buse de projection 20. Le corps creux présente une forme de révolution autour de l'axe d'allongement (X'), en étant fermé à une extrémité par une bride d'entrée 26 et en présentant à l'extrémité opposée un manchon à l'intérieur duquel est apte à coulisser le piston. Un embout d'admission d'un fluide de nettoyage est formé en saillie de la bride d'entrée 26.

Tel que cela a été précisé, le piston 18 du dispositif de nettoyage comporte à son extrémité une buse de projection 20, qui est reliée fluidiquement au reste du dispositif de nettoyage par l'intermédiaire de moyens connus, de sorte à permettre la projection d'un fluide traversant le dispositif de nettoyage 12.

La buse de projection 20 comprend deux parties distinctes, à savoir une base 30, rendue solidaire du piston 18, et une partie de recouvrement 32. Lorsqu'elles sont assemblées, ces deux parties définissent entre elles un conduit de distribution 34 qui s'étend entre une extrémité proximale 36, formant l'entrée du conduit de distribution reliée fluidiquement à un canal de distribution du dispositif de nettoyage, et une extrémité distale 38 de la buse de projection 20, formant la sortie du conduit par laquelle le fluide est susceptible d'être projeté vers la surface optique à nettoyer.

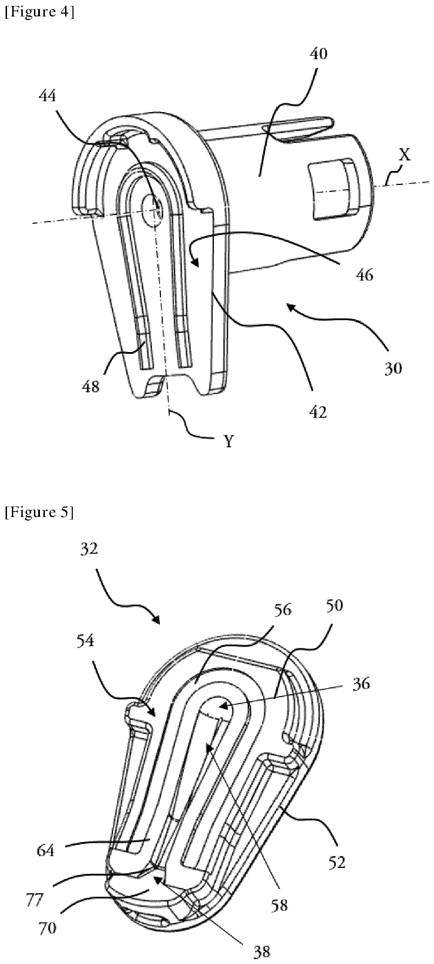

La base 30 de la buse de projection, visible sur les figures 3 et 4, comporte une portion de fixation 40 au piston 18, formée ici d'un fût cylindrique qui s'étend selon l'axe d'allongement (X). La portion de fixation 40 est de forme complémentaire à l'extrémité libre du piston 18, afin de permettre leur rattachement par encliquetage élastique par exemple. Le rattachement de la buse de projection 20 au reste du dispositif de nettoyage 12 est rendu étanche par l'interposition d'un joint torique non représenté.

La base 30 de la buse de projection comporte également une portion de support 42 destinée à être recouverte par la partie de recouvrement 32 précédemment évoquée, la portion de support s'étendant selon un axe (Y) qui est normal ou sensiblement normal à l'axe d'allongement (X) du fût cylindrique (visible sur la [Figure 4]). Un orifice 44 débouche sur une face de contact 46 de la base, tournée à l'opposé du piston 18. On comprend que cet orifice communique avec le canal de distribution du dispositif de nettoyage, en étant agencé dans la continuité de l'axe d'allongement du dispositif de nettoyage, de sorte que cet orifice 44 permet l'écoulement d'un fluide présent dans le corps de déploiement du dispositif de nettoyage en direction du conduit de distribution formé dans la buse de distribution.

La face de contact 46 est destinée à être recouverte par la partie de recouvrement 32. La face de contact 46 présente une surface plane ou sensiblement plane, et elle comporte une nervure 48 entourant partiellement l'orifice 44. Comme mentionné ci-dessous, la nervure 48 est destinée à permettre un assemblage étanche entre la base 30 et la partie de recouvrement 32 de la buse de projection 20 et à définir la forme du conduit de distribution. Il convient alors de noter que la nervure 48 présente une forme en U, avec des branches qui s'étendent vers l'extrémité distale 38 de la buse de projection.

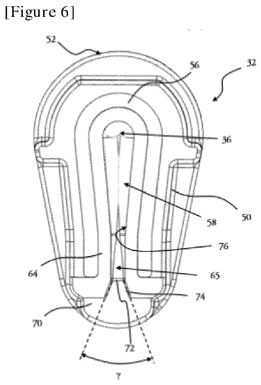

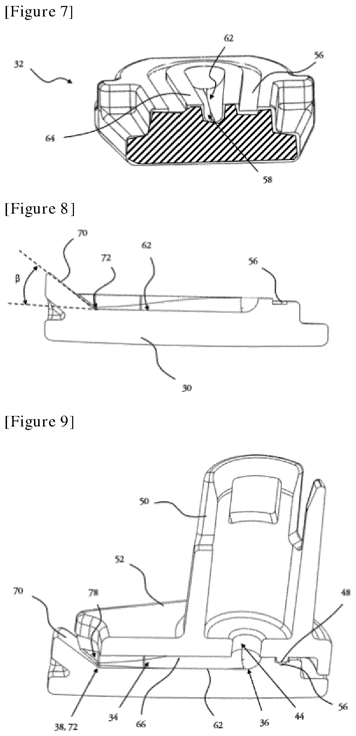

Comme illustré par la [Figure 5], la [Figure 6] et la [Figure 7], la partie de recouvrement 32 de la buse de projection comprend un manchon 50, directement au contact de la base 30, et une plaque de fermeture 52 formant une collerette prolongeant radialement l'extrémité du manchon opposée à la base 30.

Le manchon 50 présente une face d'extrémité libre 54, amenée à être en contact avec la face de contact 46 de la portion de support 42 de la buse de projection 20. Le manchon 50 comprend une empreinte 56, notamment visible sur la [Figure 5], la [Figure 6] et la [Figure 7], ménagée sur la face d'extrémité libre 54 et configurée pour correspondre en formes et en dimensions à la nervure 48 agencée sur la base. On comprend, tel que cela est partiellement visible sur la [Figure 9], que l'empreinte 56 et la rainure 48 coopèrent, lorsque la buse de projection est assemblée par fixation de la base 30 et de la partie de recouvrement 32, pour former étanchéité à la circulation de fluide dans la buse de projection.

On peut prévoir de coller la partie de recouvrement 32 sur la base 30 de la buse de projection, ou bien de les assembler par l'intermédiaire de moyens de déformation élastique. Dans un mode de réalisation particulier, qui permet notamment d'assurer une fixation étanche et donc de minimiser les risques de fuite de fluide devant circuler dans la buse de projection, les deux parties sont soudées l'une sur l'autre, notamment par un procédé de soudage par ultrasons ou par un procédé de soudage au laser. Aussi bien pour des raisons de simplification de l'assemblage que pour des raisons esthétiques, les deux parties de la buse de projection 20 présentent respectivement, en section dans un plan perpendiculaire à l'axe d'allongement longitudinal (X) du dispositif de nettoyage, des pourtours de forme et de dimensions équivalentes.

La partie de recouvrement 32 de la buse de projection comporte, sur sa face d'extrémité libre, une tranchée 58 qui s'étend à l'intérieur de l'empreinte 56, en direction de l'extrémité distale 38 de la buse de projection, de manière à être en regard du débouché de l'orifice 44.

Tel que cela est illustré sur la [Figure 5], la [Figure 6] et la [Figure 7] notamment, la tranchée 58 participe à former, avec la face de contact 46 de la base 30, le conduit de distribution 34 évoqué précédemment et s'étendant le long de l'axe (Y).

Une paroi de fond 62 du conduit de distribution 34, disposée à l'opposé de la base 30, est formée par le fond de la tranchée 58, qui s'étend parallèlement ou sensiblement parallèlement au plan dans lequel s'étend la face d'extrémité libre 54 du manchon. La profondeur de la tranchée 58, définie par la position de la paroi de fond, est de l'ordre de 0.3 à 1.5 millimètres, étant entendu que cette valeur est donnée à titre indicatif sans qu'elle soit limitative de l'invention.

Le conduit de distribution 34 est borné par deux parois latérales 64 qui sont normales ou sensiblement normales à la paroi de fond 62. Dans l'exemple illustré, les parois latérales présentent une face interne droite et perpendiculaire à la paroi de fond au niveau de l'extrémité distale du conduit de distribution 34.

Dans ce conduit de distribution 34, les parois latérales 64 sont écartées d'une distance comprise entre 3 et 10 millimètres, étant noté que tel que cela va être décrit plus en détail ci-après, le conduit présente une largeur, c'est-à-dire une distance entre les parois latérales, qui est variable d'une extrémité à l'autre, avec un évasement au niveau de la sortie de fluide et avec une largeur au niveau de l'entrée de fluide qui est supérieure à la largeur au niveau de la sortie de fluide. Il en résulte, dans une partie centrale du conduit, un goulet d'étranglement 65.

Comme illustré notamment par la figure 9, la circulation de fluide jusqu'à l'orifice de sortie de la buse de projection est rendue possible par la formation d'un conduit de distribution 34 réalisé par le plaquage de la face d'extrémité libre 54 de la partie de recouvrement 32 contre la face de contact 46 de la base 30. La face de contact 46 forme ainsi une paroi supérieure 66 fermant le conduit de distribution 34, de sorte à obtenir un chemin continu pouvant guider le fluide avec le canal de distribution du dispositif de nettoyage.

La partie de recouvrement 32 de la buse de projection comporte également un plan incliné formant rampe 70, disposée en regard de l'extrémité distale du conduit de distribution 34. Selon le présent exemple, la rampe 70 est formée par une excroissance en saillie de la face de contact 46 de la partie de recouvrement 32. Le plan incliné s'étend notamment en saillie de la face d'extrémité libre 54 du manchon 50 et la rampe ainsi formée s'étend latéralement de manière à se trouver à la fois en regard de l'extrémité distale du conduit de distribution 34 et en regard des parois latérales 64 bordant ce conduit. La rampe 70 forme un angle d'inclinaison β avec le plan dans lequel s'étend la paroi de fond 62 du conduit de distribution, comme cela est notamment visible sur la [Figure 8]. La valeur de l'angle d'inclinaison β est comprise entre 10° et 60°, notamment entre 15° et 50°, de préférence de l'ordre de 20 à 30°. De la sorte, un fluide de nettoyage provenant du conduit de distribution 34 est dévié par la rampe 70, sous la forme d'un jet plat 100 et divergent, pour nettoyer la face externe 10 du capteur optique 4, tel que cela est illustré de façon schématique sur la [Figure 2]. La rampe 70 a pour fonction de casser le flux de fluide en sortie du conduit de distribution 34 et de permettre son éclatement dans un plan perpendiculaire au plan incliné formant rampe. Par les termes « jet plat », on entend un jet de fluide contenu dans un volume se caractérisant par une dimension très faible par rapport aux deux autres dimensions dudit volume. Autrement dit, le jet de fluide est compris entre deux plans proches et parallèles entre eux.

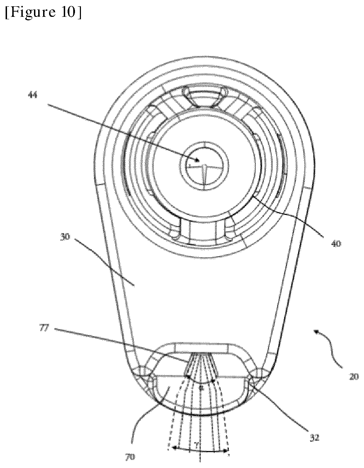

Afin de limiter la valeur de l'angle de divergence α (visible sur la [Figure 2] notamment, et sur la [Figure 10]) du jet plat formé après réflexion du fluide sur la rampe 70, la partie de recouvrement 32 est configurée de sorte que le conduit de distribution 34 réalisé dans la buse de projection 20 est prolongé jusqu'au plan incliné formant rampe 70 (voir la [Figure 8]). En d'autres termes, la paroi de fond 62 et les parois latérales 64, formées dans la partie de recouvrement et participant à définir le conduit de distribution 34, s'étendent jusqu'au plan incliné formant rampe 70 de manière à présenter une continuité de matière.

Le plan incliné formant rampe 70 s'étend vers l'intérieur du manchon jusqu'à la paroi de fond 62 participant à former le conduit de distribution 34, en formant une arête de jonction 72 entre cette paroi de fond et la rampe.

Par ailleurs, chaque paroi latérale s'étend de sorte que la face d'extrémité libre 54 du manchon 50 soit prolongée jusqu'au contact avec la rampe 70 formant ainsi une arête de jonction 74. Ainsi, chaque paroi latérale 64 est liée au plan incliné formant rampe 70 le long d'une de ces arêtes 74. Chaque paroi latérale 64 présente une face interne 76, disposée en regard de la face interne de l'autre paroi latérale participant à délimiter le conduit de distribution 34. Au voisinage de l'extrémité distale 38 du conduit, chaque paroi latérale présente une portion chanfreinée 77, formant un évasement entre les faces internes 76. Les portions chanfreinées présentent ici une forme plane, en formant entre elles un angle d'ouverture γ de l'extrémité distale du conduit de distribution. La valeur de l'angle γ est compris 10° et 80°, de préférence entre 30° et 50° ou de l'ordre de 40°. En d'autres termes, au niveau de l'extrémité distale 38 du conduit de distribution 34, les parois latérales 64 s'écartent l'une de l'autre en direction du plan incliné formant rampe 70.

Il est à noter que l'extrémité de la paroi supérieure 66 du conduit de distribution 34 est au moins partiellement en retrait du plan incliné 70, de manière à délimiter un bord d'un orifice de distribution 78 par lequel est projeté le fluide de nettoyage.

Le fait de lier les parois latérales 64 à la rampe 70, et de former un évasement de l'extrémité distale 38 du conduit de distribution 34 en écartant l'une de l'autre lesdites parois latérales au fur et à mesure de leur rapprochement de la rampe 70, permet avantageusement de limiter la valeur maximale de l'angle de divergence α du jet plat 100 sortant par l'orifice de distribution 78.

L'invention permet alors d'empêcher un élargissement du jet plat lorsque sa pression et/ou sa température varient dans les plages de valeurs définies ci-dessus. Dans ces conditions changeantes, le fluide vient impacter la rampe avec toujours le même angle d'ouverture γ du fait de l'évasement des parois latérales qui se prolongent jusqu'à la rampe, sans interruption de ces parois latérales. Il en résulte une divergence du flux maitrisée avant l'impact sur la rampe et donc une divergence maitrisée en sortie de la buse de distribution.

Dans l'exemple illustré, et tel que cela est représenté plus particulièrement sur la figure 9, on assure une variation de l'angle de divergence α du flux en sortie de buse de projection qui est de l'ordre de 5 à 10°, étant entendu que dans une conception de l'art antérieur sans parois latérales évasées et prolongées jusqu'à la rampe, ces variations pouvaient aller jusqu'à 40°. De ce fait, une buse de projection selon l'invention permet un nettoyage sensiblement identique de la face externe 10 du capteur optique même lorsque la pression et/ou la température du fluide varient dans des plages prédéterminées.

Il convient de noter que l'invention n'est pas limitée aux seuls modes de réalisation de buse de projection de dispositif de nettoyage explicitement décrits ci-dessus et qu'à titre d'exemple de variante non exhaustif, on pourra notamment modifier la forme des pièces composant la buse de projection et/ou la forme de la tranchée participant à former le conduit de distribution, dès lors que la buse de projection comporte un plan incliné lié à des parois latérales du canal de distribution, lesdites parois latérales s'écartant en direction du plan incliné.

## Revendications

1. Buse de projection (20) d'un fluide apte à être disposée sur un corps d'un dispositif de nettoyage (12) d'un système de détection optique (4) monté sur un véhicule automobile (2), ladite buse comprenant un conduit de distribution (34) interne qui s'étend entre une extrémité proximale (36), apte à être reliée fluidiquement à un canal de distribution de fluide ménagé dans ledit corps, et une extrémité distale (38) formant orifice de sortie du fluide, le conduit de distribution (34) étant délimité au moins par une paroi de fond (62) et deux parois latérales (64) opposées, ladite buse comportant par ailleurs une rampe (70) agencée sur le trajet du fluide au niveau de l'orifice de sortie, **caractérisée en ce que** les parois latérales (64) sont agencées au niveau de l'extrémité distale (38) du conduit de distribution de manière à s'écarter l'une de l'autre, ledit conduit de distribution présentant un évasement en direction de la rampe (70).

2. Buse de projection (20) selon la revendication
précédente, **caractérisé en ce que** la paroi de fond (62) et les parois latérales (64) comportent respectivement une arête de jonction (72, 74) avec la rampe (70).

3. Buse de projection (20) selon la revendication
précédente, **caractérisé en ce que** les parois latérales (64) s'étendent perpendiculairement à la paroi de fond (62) au moins au niveau de l'extrémité distale (38) du conduit de distribution dans la portion où elles s'écartent l'une de l'autre.

4. Buse de projection (20) selon l'une des revendications précédentes, **caractérisé en ce que** l'intersection entre chaque paroi latérale (64) et la rampe (70) forme une arête de jonction (74) rectiligne ou sensiblement rectiligne, lesdites arêtes de jonction (74) formant entre elles un angle d'ouverture (γ) compris entre 10° et 80°.

5. Buse de projection (20) selon l'une des revendications précédentes, **caractérisé en ce que** la rampe (70) forme avec le plan dans lequel s'étend la paroi de fond (62) du conduit de distribution un angle d'inclinaison (β) dont la valeur est comprise entre 10° et 60°.

6. Buse de projection (20) selon l'une des revendications précédentes, **caractérisé en ce que** la buse de projection comporte une base (30) et une partie de recouvrement (32) fixées l'une sur l'autre pour former entre elles le conduit de distribution (34).

7. Buse de projection (20) selon la revendication précédente, **caractérisé en ce que** la partie de recouvrement (32) est configurée pour former d'un seul tenant la paroi de fond du conduit de distribution, les parois latérales (64) et le plan incliné formant rampe (70).

8. Dispositif de nettoyage (12) d'un système de détection optique (4) monté sur un véhicule automobile (2), comprenant une buse de projection (20) selon l'une des revendications précédentes.

9. Dispositif de nettoyage (12) selon la revendication précédente, **caractérisé en ce que** la buse de projection (20) est agencée à l'extrémité d'un corps télescopique, le dispositif de nettoyage étant configuré pour prendre au moins une position de repos et une position de travail dans laquelle la buse de projection est en regard d'une surface vitrée du système de détection optique à nettoyer.

10. Véhicule automobile (2) comprenant un dispositif de nettoyage (12) selon la revendication 8 ou 9.

## Patentansprüche

1. Sprühdüse (20) für eine Flüssigkeit, die geeignet ist, an einem Körper einer Reinigungsvorrichtung (12) eines optischen Detektionssystems (4) angeordnet werden, das an einem Kraftfahrzeug (2) montiert ist, wobei die Düse eine innere Verteilungsleitung (34) umfasst, die sich zwischen einem proximalen Ende (36), das geeignet ist, fluidisch mit einem in dem Körper ausgebildeten Flüssigkeitsverteilungskanal verbunden zu werden, und einem die Austrittsöffnung der Flüssigkeit bildenden distalen Ende (38) erstreckt, wobei die Verteilungsleitung (34) mindestens durch eine Bodenwand (62) und zwei entgegengesetzte Seitenwände (64) begrenzt wird, wobei die Düse im Übrigen eine Rampe (70) beinhaltet, die an der Austrittsöffnung auf dem Weg der Flüssigkeit ausgebildet ist, **dadurch gekennzeichnet, dass** die Seitenwände (64) an dem distalen Ende (38) der Verteilungsleitung so ausgebildet sind, dass sie sich voneinander beabstanden, wobei die Verteilungsleitung eine Aufweitung in Richtung der Rampe (70) aufweist.

2. Sprühdüse (20) nach dem vorhergehenden Anspruch, **dadurch gekennzeichnet, dass** die Bodenwand (62) und die Seitenwände (64) jeweils eine Verbindungskante (72, 74) mit der Rampe (70) beinhalten.

3. Sprühdüse (20) nach dem vorhergehenden Anspruch, **dadurch gekennzeichnet, dass** sich die Seitenwände (64) mindestens an dem distalen Ende (38) der Verteilungsleitung in dem Abschnitt, in dem sie sich voneinander beabstanden, senkrecht zu der Bodenwand (62) erstrecken.

4. Sprühdüse (20) nach einem der vorhergehenden Ansprüche, **dadurch gekennzeichnet, dass** die Schnittstelle zwischen jeder Seitenwand (64) und der Rampe (70) eine geradlinige oder im Wesentlichen geradlinige Verbindungskante (74) bildet, wobei die Verbindungskanten (74) untereinander einen Öffnungswinkel (γ) zwischen 10° und 80° bilden.

5. Sprühdüse (20) nach einem der vorhergehenden Ansprüche, **dadurch gekennzeichnet, dass** die Rampe (70) mit der Ebene, in der sich die Bodenwand (62) der Verteilungsleitung erstreckt, einen Neigungswinkel (β) bildet, dessen Wert zwischen 10° und 60° beträgt.

6. Sprühdüse (20) nach einem der vorhergehenden Ansprüche, **dadurch gekennzeichnet, dass** die Sprühdüse eine Basis (30) und ein Abdeckteil (32) beinhaltet, die aneinander fixiert sind, um untereinander die Verteilungsleitung (34) zu bilden.

7. Sprühdüse (20) nach dem vorhergehenden Anspruch, **dadurch gekennzeichnet, dass** das Abdeckteil (32) dazu ausgestaltet ist, in einem Stück die Bodenwand der Verteilungsleitung, die Seitenwände (64) und die eine Rampe bildende geneigte Ebene (70) zu bilden.

8. Reinigungsvorrichtung (12) für ein optisches Detektionssystem (4), das an einem Kraftfahrzeug (2) montiert ist, umfassend eine Sprühdüse (20) nach einem der vorhergehenden Ansprüche.

9. Reinigungsvorrichtung (12) nach dem vorhergehenden Anspruch, **dadurch gekennzeichnet, dass** die Sprühdüse (20) am Ende eines teleskopischen Körpers ausgebildet ist, wobei die Reinigungsvorrichtung dazu ausgestaltet ist, mindestens eine Ruhestellung einzunehmen und eine Arbeitsstellung, in der die Sprühdüse gegenüber einer verglasten Fläche des zu reinigenden optischen Detektionssystems ist.

10. Kraftfahrzeug (2), umfassend eine Reinigungsvorrichtung (12) nach Anspruch 8 oder 9.

## Claims

1. A fluid spray nozzle (20) able to be arranged on a body of a cleaning device (12) for cleaning an optical detection system (4) mounted on a motor vehicle (2), said nozzle comprising an internal distribution duct (34) which extends between a proximal end (36), able to be fluidically connected to a fluid distribution canal formed in said body, and a distal end (38) forming an outlet orifice for the fluid, the distribution duct (34) being delimited at least by a bottom wall (62) and two opposing lateral walls (64), said nozzle furthermore comprising a ramp (70) arranged in the path of the fluid at the level of the outlet orifice, **characterized in that** the lateral walls (64) are arranged at the level of the distal end (38) of the distribution duct so as to diverge from one another, said distribution duct flaring in the direction of the ramp (70).

2. The spray nozzle (20) as claimed in the preceding claim,
**characterized in that** the bottom wall (62) and the lateral walls (64) respectively comprise an arris (72, 74) at their intersection with the ramp (70).

3. The spray nozzle (20) as claimed in the preceding claim,
**characterized in that** the lateral walls (64) extend perpendicular to the bottom wall (62) at least at the level of the distal end (38) of the distribution duct in the portion in which they diverge from one another.

4. The spray nozzle (20) as claimed in one of the preceding claims, **characterized in that** the intersection between each lateral wall (64) and the ramp (70) forms a rectilinear or near-rectilinear arris of intersection (74), said arrises of intersection (74) making between them an angle of opening (γ) comprised between 10° and 80°.

5. The spray nozzle (20) as claimed in one of the preceding claims, **characterized in that** the ramp (70) forms with the plane in which the bottom wall (62) of the distribution duct extends, an angle of inclination (β) of which the value is comprised between 10° and 60°.

6. The spray nozzle (20) as claimed in one of the preceding claims, **characterized in that** the spray nozzle comprises a base (30) and a cover part (32) which are fixed one on the other to form the distribution duct (34) between them.

7. The spray nozzle (20) as claimed in the preceding claim, **characterized in that** the cover part (32) is configured to form, in one piece, the bottom wall of the distribution duct, the lateral walls (64) and the inclined plane that forms the ramp (70).

8. A cleaning device (12) for an optical detection system (4) mounted on a motor vehicle (2), comprising a spray nozzle (20) as claimed in one of the preceding claims.

9. The cleaning device (12) as claimed in the preceding claim, **characterized in that** the spray nozzle (20) is arranged at the end of a telescopic body, the cleaning device being configured to adopt at least a rest position and a work position in which the spray nozzle faces a glazed surface of the optical detection system that is to be cleaned.

10. A motor vehicle (2) comprising a cleaning device (12) as claimed in claim 8 or 9.
